# EUROPEAN PATENT APPLICATION

(11) **EP 4 645 568 A1**
(43) Date of publication of application: **05.11.2025**
(21) Application number: 23911543.9
(22) Date of filing: 01.12.2023
(51) Int. Cl.: H01M 50/44, H01M 50/414, H01M 50/434, H01M 50/437, H01M 50/443, H01M 50/489

(54) **SEPARATOR FOR SEALED LEAD-ACID BATTERY**

(30) Priority: 26.12.2022 JP 2022208838
(71) Applicant: ENTEK Asia Inc, Fuwa-gun Gifu 503-2121 (JP)
(72) Inventor: SUGIYAMA, Shoji, Fuwa-gun, Gifu 503-2121 (JP); KATAGIRI, Yuji, Fuwa-gun, Gifu 503-2121 (JP)
(74) Representative: Körfer, Thomas
(86) International application number: PCT/JP2023/043164
(87) International publication number: WO 2024/142762

(57) **Abstract**

[Problem] The invention has been made by focusing on the fact that a conventional separator with a specified fiber distribution or fiber orientation was unable to sufficiently control the gas absorption reaction, which is one of the basic functions of a sealed lead-acid battery, and, in order to control the gas permeation ability itself of the separator, the invention makes it possible to provide an optimum separator which can reduce the amount of adjustment of the electrolyte concentration (specific gravity) after chemical conversion in a container of a sealed lead-acid battery, and can prevent abnormal heat generation of the battery in an actual battery use environment.

[Solution] Preparation is performed so that the gas permeation rate in a wet state of a separator is 15 mm/min or less, and/or the gas permeability in a wet state of the separator is 70% or less.

## Description

### Technical Field

The present invention relates to a separator for a sealed lead-acid battery. More specifically, the invention relates to a separator that is optimal for adjusting the specific gravity of the electrolyte during chemical conversion in a container of a sealed lead-acid battery.

### Background Art

Conventionally, a separator for a sealed lead-acid battery made of a wet-formed sheet has been produced using an inclined or cylinder papermaking machine that performs forced dehydration under reduced pressure. When a wet-formed sheet mainly formed of glass fibers is produced using an inclined or cylinder papermaking machine, a forming wire is moved while a papermaking raw material liquid in which glass fibers and the like are dispersed in water is dehydrated from the lower surface side of the forming wire, so that the glass fibers are deposited on the upper surface of the forming wire to form a fiber layer. Due to this, there has been a problem that relatively large fibers gather on the rear surface side of the sheet (the side of the contact surface with the forming wire), while relatively fine fibers gather on the front surface side (the side opposite to the contact surface with the forming wire), resulting in an uneven fiber distribution in the thickness direction of the sheet. Further, relatively fine fibers gather on the front surface side of the sheet, and therefore there has also been a problem that the surface smoothness is very poor on the surface of the sheet. In addition, on the surface where the glass fibers are deposited, that is, the surface where the glass fiber layer is formed, the sheet is formed while the forming wire is moved, and therefore, immediately after one end of a fiber lands on the forming wire surface, the fiber is pulled in the moving direction of the forming wire. Therefore, there has also been a problem that many fibers are oriented in the moving direction of the forming wire, that is, in the longitudinal direction of the sheet, and the fiber orientation in the longitudinal and lateral directions of the sheet becomes non-uniform (a state in which the fiber orientation has directionality). In particular, this problem becomes more pronounced when the papermaking rate is increased, and thus becomes one of the factors that the papermaking rate cannot be easily increased.

Such a problem can become a big problem especially when the separator is used as a separator for a sealed lead-acid battery. First, when the fiber distribution in the thickness direction of the sheet is not uniform, that is, when a gradient is formed in the fiber distribution, a similar tendency appears also in the density distribution in the thickness direction, and a difference in the electrolyte absorption rate between the front and rear surfaces of the sheet occurs. Therefore, the mobility of the electrolyte during charging and discharging becomes non-uniform, which causes the battery performance to vary. In addition, when the surface smoothness of the sheet is poor, the adhesion to an electrode plate becomes poor, and the oxygen gas absorption reaction does not proceed well, which causes the battery performance to deteriorate. Further, when the fiber orientation in the longitudinal and lateral directions of the sheet is not uniform (a state in which the fiber orientation has directionality), a difference in the electrolyte absorption rate in the longitudinal and lateral directions of the sheet occurs. Further, unless the papermaking rate cannot be significantly increased, it is difficult to improve the productivity, that is, to reduce the production cost.

Meanwhile, in conventional battery production, a battery is assembled using an electrode plate that has already undergone a chemical conversion step. However, in recent years, chemical conversion in a container in which a battery is assembled using an unformed electrode plate before undergoing a chemical conversion step, an electrolyte is injected after the battery is assembled, and the unformed electrode plate is subjected to chemical conversion by applying a current is becoming mainstream.

The mechanism of chemical conversion in a container is the same as that of battery charging, but a larger amount of electricity is required than for general battery charging, and therefore a large amount of oxygen gas is generated from the positive electrode inside the battery. The oxygen gas generated here is absorbed by the negative electrode and water is generated, but the oxygen gas that is not absorbed is released outside the battery system. As a result, water is not generated in proportion to the oxygen gas released outside the system, and liquid reduction of the electrolyte occurs.

Therefore, in the chemical conversion in a container, a certain amount of liquid reduction is expected so that the sulfuric acid concentration of the electrolyte after the chemical conversion in a container falls within a set range. However, on the other hand, if the gas absorption reaction during the chemical conversion in a container is excessively promoted, the electrolyte concentration (specific gravity) after the chemical conversion in a container is completed becomes lower than the intended concentration (specific gravity), which will result in a decrease in the battery capacity. Therefore, due to the large number of gas absorption reactions occurring, it becomes necessary to adjust the concentration (specific gravity) of the electrolyte after the chemical conversion in a container is completed, and an extra amount of electricity is required for this, which results in high energy cost and is disadvantageous.

Further, also in an actual battery use environment, the gas absorption reaction during charging is an exothermic reaction, and therefore when a large number of gas absorption reactions occur, the temperature inside the battery increases. During constant voltage charging, the current value also increases, which causes a further increase in the temperature inside the battery, and also becomes a cause of battery thermal runaway.

A separator for a sealed lead-acid battery, which is mainly formed of glass fibers, and in which the fiber distribution of the separator is made uniform in the longitudinal and lateral directions (on the plane), thereby making the gas absorption reaction uniform in the longitudinal and lateral directions of the electrode plate surface of the battery, has been disclosed (see, for example, PTL 1).

Further, a separator for a sealed lead-acid battery, which is mainly formed of glass fibers, and in which the planar fiber orientation is made uniform in the longitudinal and lateral directions (on the plane) by expressing the two-dimensional fiber orientation on the plane of the separator as the tensile strength ratio in the longitudinal and lateral directions (on the plane) of the separator, and further expressing the three-dimensional fiber orientation of the separator as the compression force during electrolyte injection in the separator to three-dimensionally quantify the fiber orientation of the separator, and many fibers are oriented also in the thickness direction (vertical direction) of the separator by further increasing the compression force during electrolyte injection, has been disclosed (see, for example, PTL 2).

However, these patent literatures disclose that the gas permeation through the separator is made uniform to make the gas absorption reaction uniform on the electrode surface, and oxygen gas generated at the positive electrode is rapidly transferred to the negative electrode to promote the gas absorption reaction, but do not disclose at all that the gas permeation ability itself is controlled.

### Citation List

### Patent Literature

PTL 1: JP4864457B
PTL 2: JP6606621B

### Summary of Invention

### Technical Problem

The invention has been made by focusing on the fact that a conventional separator with a specified fiber distribution or fiber orientation was unable to sufficiently control the gas absorption reaction, which is one of the basic functions of a sealed lead-acid battery. In order to control the gas permeation ability itself of the separator, an object of the invention is to first establish an evaluation method for ascertaining the gas permeation performance of the separator in a wet state (a state in which the space in the separator is filled with water), and further to make it possible to provide an optimum separator which can easily adjust the electrolyte concentration (specific gravity) after chemical conversion in a container of a sealed lead-acid battery using the established evaluation method, and can prevent abnormal heat generation of the battery in an actual battery use environment.

### Solution to Problem

As a result of intensive studies to solve the above problems, a separator for a sealed lead-acid battery of the invention is a separator for a sealed lead-acid battery having the following characteristics.
(1) A separator for a sealed lead-acid battery, which is a nonwoven fabric mainly formed of micro-glass fibers and has a gas permeation rate of 15 mm/min or less and/or a gas permeability of 70% or less in a wet state.
(2) The separator for a sealed lead-acid battery according to the above (1), which is a nonwoven fabric mainly formed of micro-glass fibers and has a gas permeation rate of 15 mm/min or less and a gas permeability of 70% or less in a wet state.
(3) The separator for a sealed lead-acid battery according to the above (1) or (2), in which the micro-glass fibers have a number average fiber diameter of 4.5 µm or less and are a mixture of two or more types of micro-glass fibers having different number average fiber diameters.
(4) The separator for a sealed lead-acid battery according to any one of the above (1) to (3), in which the separator has a drainage resistance (SR: Schopper Riegler) value of 20 or more.
(5) The separator for a sealed lead-acid battery according to any one of the above (1) to (4), in which a raw material concentration when the separator is formed is 0.30 wt% or less.
(6) The separator for a sealed lead-acid battery according to any one of the above (1) to (5), in which a raw material flow rate when the separator is formed is 10.0 m/min or more.
(7) The separator for a sealed lead-acid battery according to any one of the above (1) to (6), in which a blending amount of long glass fibers having a number average fiber diameter of 6 µm or more and a number average fiber length of 3 mm or more is 2 wt% or more.
(8) The separator for a sealed lead-acid battery according to any one of the above (1) to (7), in which a blending amount of organic fibers having a fineness of 0.5 dtex or more and a number average fiber length of 3 mm or more is 2 wt% or more.
(9) The separator for a sealed lead-acid battery according to any one of the above (1) to (8), in which a blending amount of an inorganic powder is 5 wt% or more.
(10) The separator for a sealed lead-acid battery according to any one of the above (1) to (9), in which a blending amount of thermally fusible organic fibers is 5 wt% or more.
(11) A sealed lead-acid battery, including the separator for a sealed lead-acid battery according to any one of the above (1) to (9).

### Advantageous Effects of Invention

As described above, with a separator prepared so that the gas permeation rate in a wet state of the separator is 15 mm/min or less and/or the gas permeability in a wet state of the separator is 70% or less, the gas permeation ability of the separator can be controlled (reduced), and therefore the electrolyte concentration (specific gravity) after chemical conversion in a container of a sealed lead-acid battery can be easily adjusted, and further a separator capable of preventing abnormal heat generation of the battery in an actual battery use environment can be provided.

### Brief Description of Drawings

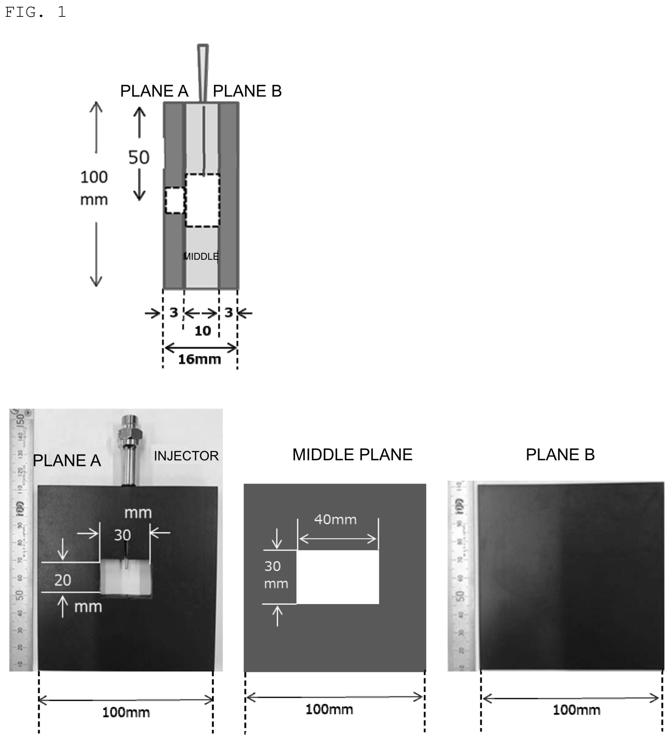

[FIG. 1] FIG. 1 is a schematic diagram showing an example of a gas supply jig used in a test for ascertaining gas permeation performance.

### Description of Embodiments

In the invention, it is necessary to compare and determine the gas permeation ability in a state close to a state in which the separator is used in an actual sealed lead-acid battery, that is, in a wet state such that the separator is immersed in the electrolyte.

Conventionally, as a method for evaluating the gas permeation ability of a separator, for example, a method in which one sheet of separator is immersed in a volatile solvent in a horizontal position, a thin solvent layer is formed thereon, and then a gas (air) is supplied from the lower side of the separator to forcibly pass through the inside of the separator is known (for example, a bubble point method known as a method for measuring the maximum pore size).

However, in an actual battery use environment, the separator is placed vertically (in up and down directions) in line with the electrode plate, and is used in a state of being immersed in an electrolyte (an aqueous sulfuric acid solution).

Gas movement in a battery is a phenomenon in which oxygen gas generated from the positive electrode moves toward the negative electrode when the separator is in a state of being compressed between the electrode plates. The separator is in a state of being filled with an electrolyte (an aqueous sulfuric acid solution), and since oxygen gas is a gas, it cannot easily pass through the separator and follows an upward path due to the properties of a gas.

In the evaluation method for ascertaining the gas permeation performance of the separator according to the invention, about 10 sheets of separators in a stacked state are placed in a polyethylene bag, and then, all the separators are entirely impregnated with water and set in a pressurizer so that the separators are arranged vertically (in up and down directions). Then, a test is performed by supplying nitrogen gas horizontally (thickness direction of the separator) with a pressure of 50 kPa applied, and the movement status of the nitrogen gas is evaluated under conditions simulating an actual battery use environment.

Here, the reason for performing the test by replacing the electrolyte (an aqueous sulfuric acid solution) with water and oxygen gas with nitrogen gas is to consider safety during measurement.

The pressure and flow rate of the nitrogen gas supply were set to 0.1 MPa and 0.025 L/min, respectively, so that the maximum moving distance and time (rate) that the nitrogen gas moves through the separator can be compared with good reproducibility for many types of separators.

Specifically, the test method for ascertaining the gas permeation performance of the separator according to the invention is performed, for example, as follows.
1) A separator is cut into pieces with a size of 100 × 100 mm, and 10 pieces are stacked together with the flow direction (longitudinal direction: MD direction) in the separator aligned to prepare a test specimen.
2) The thickness of the test specimen when the test specimen is pressurized to 20 kPa (200 N) is measured.
3) The test specimen and the gas supply jig (see FIG. 1) are placed in a polyethylene bag, and the bag is clamped between compression platens of a horizontal compressor so that the test specimen and the gas supply jig are arranged vertically (in up and down directions) like an actual lead-acid battery.
   The gas supply jig is a box-shaped hard rubber gas supply tool with a size of 100 × 105 × 16 mm, and includes three sheets (plane A, middle plane, and plane B) of rubber plates (NBR, hardness: 70°) integrated together with an adhesive, and an injector (an air duster gun nozzle manufactured by Kinki Seisakusho Co., Ltd., nozzle length: 100 mm, caliber: 1 mm φ, outer diameter: 1.5 mm) for supplying a gas is inserted into the upper part of the middle plane.
4) The pressure to be applied to the sample specimen is set to 15 to 25 N, and water is added little by little into the polyethylene bag using a funnel until about 90% of the sample specimen is immersed, and the sample specimen is left to stand for 30 minutes.
5) The test specimen is pressurized to 50 kPa (500 N) and the thickness of the test specimen is measured.
6) Nitrogen gas adjusted to a pressure of 0.1 MPa and a gas flow rate of 0.025 L/min is allowed to flow through the test specimen from the gas supply jig. The nitrogen gas is supplied from the vicinity of the center of the gas supply jig to the vicinity of the center of the test specimen, flows laterally (in the thickness direction of the separator), and finally follows an upward path toward the upper side of the test specimen.
7) A bubble (gas) leaking out from the upper part of the test specimen is carefully observed using a magnifying glass or the like.
8) After the gas is supplied, among the bubbles (gas) leaking out, the bubble (gas) leaking out at the farthest point from the gas supply jig in the test specimen (the number of sheets of separators from the gas supply jig) is observed regarding its position (the number of sheets from the gas supply jig), and the time (sec) until the bubble leaks out at that position is measured.

Here, in order to obtain data with good reproducibility, it is preferable to perform measurement by placing the test specimen so that the flow direction (longitudinal direction: MD direction) in the separator is the longitudinal direction (up and down directions).

The number of sheets of separators stacked as a test specimen may be increased or decreased in consideration of the thickness of the separator. In that case, it is desirable to perform evaluation by conversion assuming that 10 sheets are used in order to enable comparison and determination to be equally performed for many types of separators.

Further, in consideration of data fluctuations, it is desirable to repeat the test multiple times (for example, three times) and perform evaluation using the average value.

The gas permeation rate (mm/min) for ascertaining the gas permeation performance of the separator according to the invention is determined, for example, as follows.
1) The thickness of one sheet of separator is calculated from the thickness of the test specimen when pressurized to 50 kPa.
2) A bubble (gas) generation distance (mm) is calculated from the position (the number of sheets of separators from the gas supply jig) of the bubble (gas) leaking out at the farthest point from the gas supply jig in the test specimen among the bubbles (gas) leaking out.
   For example, when the thickness of one sheet of separator when pressurized to 50 kPa is a mm and a bubble (gas) leaks out from the b-th sheet of separator, the bubble (gas) generation distance is a × b mm.
3) The gas permeation rate (mm/min) is calculated from the bubble (gas) generation distance (mm) and the time (sec) until the bubble (gas) leaks out.

The gas permeation rate (mm/min) is an index for determining how fast oxygen gas generated at the positive electrode can move inside the separator under given conditions, and the larger the value is, the more easily oxygen gas generated at the positive electrode can reach the negative electrode.

In the separator for a sealed lead-acid battery of the invention, the gas permeation rate (mm/min) is preferably 15 mm/min or less, more preferably 14 mm/min or less, and still more preferably 13 mm/min or less.

It is desirable that the gas permeability (%) for ascertaining the gas permeation performance of the separator according to the invention is calculated assuming that the thickness of the separator used in the test when pressurized to 20 kPa is 2.5 mm/sheet (25 mm for 10 sheets of separators) in consideration of reliability of evaluation because data with good reproducibility can be obtained. Use of an evaluation method in which conversion is performed assuming that a separator has a fixed thickness can provide reliable results with less variation in data and can perform comparison and determination equally even for separators having various compositions.

The gas permeability (%) for ascertaining the gas permeation performance of the separator according to the invention is determined as follows.
1) In the case of assuming that the thickness of the separator when pressurized to 20 kPa is 2.5 mm/sheet, the thickness when the test specimen is pressurized to 50 kPa (thickness of test specimen when pressurized to 50 kPa after thickness correction to 2.5 mm, mm) is calculated from the following formula.
   Thickness of test specimen (mm) when pressurized to 50 kPa after thickness correction to 2.5 mm = [Thickness of test specimen calculated assuming that thickness of separator used in test when pressurized to 20 kPa is 2.5 mm/sheet, mm] × [Thickness of test specimen when pressurized to 50 kPa (mm)] / [Thickness of test specimen when pressurized to 20 kPa (mm)]
2) The gas permeability (%) is calculated from the following formula. Gas permeability (%) = [Bubble (gas) generation distance (mm)] / [Thickness of test specimen when pressurized to 50 kPa after thickness correction to 2.5 mm (mm)] × 100

The gas permeability (%) is an index for determining what extent oxygen gas generated at the positive electrode can move to the negative electrode under given conditions, and the larger the value is, the the more easily oxygen gas moves to the negative electrode.

In the separator for a sealed lead-acid battery of the invention, the gas permeability (%) is preferably 75% or less, more preferably 70% or less, and still more preferably 60% or less.

A gas absorption reaction inhibitory effect for ascertaining the gas permeation performance of the separator according to the invention is calculated as the ratio of the measured value of the gas permeability (%) to the measured value of the gas permeation rate (mm/min), and expressed as a relative value when the ratio of the measured value of the separator of Comparative Example 1, which is a conventional product, is assumed as 1.0.

In the separator for a sealed lead-acid battery of the invention, the gas absorption reaction inhibitory effect is preferably 1.2 or more, more preferably 1.5 or more, and still more preferably 1.8 or more.

The separator for a sealed lead-acid battery of the invention is formed by wet papermaking mainly using micro-glass fibers, and may contain, in addition to the micro-glass fibers, long glass fibers, non-thermally fusible organic fibers, thermally fusible organic fibers, an inorganic powder, or the like.

By blending monofilament-like organic fibers that do not have thermal fusibility, the compressive breaking strength (shearing force) of a nonwoven fabric can be increased (see, for example, JP4261821B), and a more favorable separator can be obtained.

In addition, it is also possible to expect a combined effect to be obtained by various combinations with a material that does not have thermal fusibility.

The micro-glass fibers used in the separator for a sealed lead-acid battery of the invention are used in an electrolyte (an aqueous sulfuric acid solution having a specific gravity of 1.3), and therefore C-glass fibers having acid resistance are preferable, but this does not apply as long as the glass fibers have acid resistance.

The fiber diameters of the micro-glass fibers vary depending on an auxiliary material to be combined, but one of the expected functions of the separator is to prevent stratification, and from that viewpoint, the number average fiber diameter is preferably 4.5 µm or less, more preferably 4.0 µm or less. Further, when it is necessary to further improve the prevention of stratification for, for example, use in a lead-acid battery for an idling stop and start system (ISS), the number average fiber diameter is still more preferably 3.5 µm or less.

The micro-glass fibers are preferably wool-like micro-glass fibers from the viewpoint of the physical strength of the separator.

In the separator for a sealed lead-acid battery of the invention, the blending amount of the micro-glass fibers is preferably 50 wt% or more in order to maintain the absolute strength or the electrolyte retention function of the separator.

In the separator for a sealed lead-acid battery of the invention, it is also preferable to mix and use micro-glass fibers having different number average fiber diameters. In this case, it is preferable to combine and use the micro-glass fibers having various number average fiber diameters so that the separator has a drainage resistance (SR: Schopper Riegler) value of 20 or more. In addition, it is preferable that the value (average value) obtained by averaging the values of the number average fiber diameters of the micro-glass fibers mixed and used is within the preferred range of the number average fiber diameter of the micro-glass fibers.

In the separator for a sealed lead-acid battery of the invention, it is also preferable to blend the long glass fibers in order to improve the gas permeation performance. The long glass fibers are not particularly limited as long as the fibers are generally used in a separator for a sealed lead-acid battery, but fibers having a number average fiber diameter of 3 to 20 µm and a number average fiber length of 1 to 25 mm are preferable, and fibers being long fibers having a number average fiber diameter of 6 µm or more and a number average fiber length of 3 mm or more are more preferably used.

In the separator for a sealed lead-acid battery of the invention, the long glass fibers are preferably blended in an amount of 2 wt% or more, and more preferably 5 wt% or more in order to improve the gas permeation performance.

If the blending amount is less than 2 wt%, the distribution of the fibers during papermaking becomes non-uniform, and a sufficient effect of improving the gas permeation performance cannot be obtained.

In the separator for a sealed lead-acid battery of the invention, it is also preferable to blend the non-thermally fusible organic fibers in order to improve the gas permeation performance. The non-thermally fusible organic fibers are not particularly limited as long as the fibers are generally used in a separator for a sealed lead-acid battery, but fibers containing a polyester-based resin as a synthetic resin component are preferable, and fibers having a fineness of 0.06 to 4.0 dtex and a number average fiber length of 1 to 25 mm are preferable, and fibers being long fibers having a fineness of 0.5 dtex or more and a number average fiber length of 3 mm or more are more preferably used.

In the separator for a sealed lead-acid battery of the invention, the non-thermally fusible organic fibers are preferably blended in an amount of 2 wt% or more, and more preferably 5 wt% or more in order to improve the gas permeation performance.

If the blending amount is less than 2 wt%, the distribution of the fibers during papermaking becomes non-uniform, and a sufficient effect of improving the gas permeation performance cannot be obtained.

In the separator for a sealed lead-acid battery of the invention, it is also preferable to blend the thermally fusible organic fibers in order to maintain the tensile strength (sheet strength) and the puncture strength of the separator, and the adhesiveness (peel strength) between separators. The thermally fusible organic fibers are not particularly limited as long as the fibers are generally used in a separator for a sealed lead-acid battery, but fibers having a core-sheath structure are preferably used. In this case, the core portion may be a commonly used resin such as a polyolefin-based resin such as a polyethylene resin or a polypropylene resin, or a polyester-based resin, but a resin having acid resistance is preferable, and a polyester-based resin is preferable. In the sheath portion, a polyolefin-based resin such as a polyethylene resin or a polypropylene resin, a polyester-based resin, or the like is preferably used, and a crystalline polyolefin-based resin, or a crystalline or amorphous polyester-based resin is more preferable.

The fineness of the thermally fusible organic fibers is preferably 2.5 dtex or less, more preferably 1.6 dtex or less, and still more preferably 1.5 dtex or less in order to increase the number of thermally fusible organic fibers contained in the separator, which is a measure to increase the tensile strength (sheet strength).

As for the number average fiber length of the thermally fusible organic fibers, those having a number average fiber length of 1 to 25 mm are preferably used.

In the separator for a sealed lead-acid battery of the invention, the thermally fusible organic fibers are preferably blended in an amount of 5 wt% or more in order to improve the mechanical strength.

In the separator for a sealed lead-acid battery of the invention, it is also preferable to blend the inorganic powder in order to control the gas permeation performance. By blending the inorganic powder, the powder is retained between the micro-glass fibers, and the average pore size of the entire separator is reduced by the filling effect. At the same time, by agglomerating a part of the powder during papermaking, it is possible to locally form pores larger than the average, which makes it difficult for a gas to permeate in the thickness direction of the separator in a wet state and also makes it easier for a gas to escape outside the separator system.

The inorganic powder is not particularly limited as long as the inorganic powder is generally used in a separator for a sealed lead-acid battery such as silica having excellent acid resistance and oxidation resistance.

In the separator for a sealed lead-acid battery of the invention, the inorganic powder is preferably blended in an amount of 5 wt% or more in order to control the gas permeation performance.

If the blending amount is less than 5 wt%, the distribution in the separator during papermaking becomes non-uniform, and a sufficient effect of controlling the gas permeation performance cannot be obtained.

In this case, it is also preferable to use a dispersant or the like in combination to improve the dispersibility of the inorganic powder in a papermaking raw material liquid (slurry), particularly when the blending amount is increased, or the like.

In the separator for a sealed lead-acid battery of the invention, as for the tensile strength (sheet strength) of the separator, in order to improve the ease of assembly of a lead-acid battery, the separator preferably has a mechanical strength of 0.2 N/mm² or more, and more preferably 0.3 N/mm² or more.

If the tensile strength (sheet strength) is less than 0.2 N/mm², the performance of assembling a lead-acid battery and the basic physical properties during charging and discharging reactions decrease, and the battery life decreases.

In the separator for a sealed lead-acid battery of the invention, as for the puncture strength of the separator, in order to improve the ease of assembly of a lead-acid battery, the separator preferably has a mechanical strength of 2 N/mm or more, more preferably 4 N/mm or more, and still more preferably 6 N/mm or more.

If the puncture strength is less than 2 N/mm, the performance of assembling a lead-acid battery and the basic physical properties during charging and discharging reactions decrease, and the battery life decreases.

Conventionally, a separator for a sealed lead-acid battery made of a wet-formed sheet (nonwoven fabric) mainly formed of glass fibers have been produced using an inclined papermaking machine or the like. Here, when a wet-formed sheet (nonwoven fabric) mainly formed of glass fibers is produced using an inclined papermaking machine, a forming wire is moved while a papermaking raw material liquid in which glass fibers are dispersed in water is dehydrated from the lower surface side of the forming wire, so that the glass fibers are deposited on the upper surface of the forming wire to form a glass fiber layer. Due to this, relatively large fibers tend to gather on the rear surface side of the sheet (the side of the contact surface with the forming wire), while relatively fine fibers tend to gather on the front surface side (the side opposite to the contact surface with the forming wire), resulting in an uneven fiber distribution in the thickness direction of the sheet. Further, relatively fine fibers gather on the front surface side of the sheet, and therefore there has also been a problem that the surface smoothness is very poor on the surface of the sheet. In addition, on the surface where the glass fibers are deposited, that is, the surface where the glass fiber layer is formed, the sheet is formed while the forming wire is moved, and therefore, immediately after one end of a fiber lands on the forming wire surface, the fiber is pulled in the moving direction of the forming wire. Therefore, there has also been a tendency that many fibers are oriented in the moving direction of the forming wire, that is, in the longitudinal direction of the sheet, and the fiber orientation in the longitudinal and lateral directions of the sheet becomes non-uniform (a state in which the fiber orientation has directionality).

When the fiber distribution in the thickness direction of the sheet is not uniform, that is, when a gradient is formed in the fiber distribution, a similar tendency appears also in the density distribution in the thickness direction, and a difference in the gas permeation performance between the front and rear surfaces of the sheet occurs. Further, when the surface smoothness of the sheet is poor, the adhesion to the electrode plate becomes poor, and the oxygen gas absorption reaction does not proceed well. Further, when the fiber orientation in the longitudinal and lateral directions of the sheet is not uniform (a state in which the fiber orientation has directionality), a difference in the gas permeation performance in the longitudinal and lateral directions of the sheet occurs.

Due to this, in a separator for a sealed lead-acid battery made of a wet-formed sheet (nonwoven fabric) mainly formed of micro-glass fibers, it is necessary to adjust the forming conditions of the wet-formed sheet (nonwoven fabric) so that the fiber distribution is uniform in the longitudinal and lateral directions and the thickness direction of the separator, the fiber orientation is uniform in the longitudinal and lateral directions and the thickness direction of the separator, and the angle of the fibers oriented in the thickness direction is small with respect to the front and rear surfaces, preferably 45° or less in order to control the gas permeation ability itself.

As a papermaking condition for producing the separator for a sealed lead-acid battery of the invention, the raw material concentration during papermaking is preferably 0.30 wt% or less.

Further, the raw material flow rate (jet) during papermaking is preferably 10 m/min or more.

If the raw material concentration during papermaking exceeds 0.30 wt% or the raw material flow rate is less than 10 m/min, the dispersion state of the papermaking raw materials (fibers and the like) in the papermaking raw material liquid (slurry) becomes non-uniform, and further, in a small path through which the papermaking raw material liquid (slurry) is sent to the forming wire, the papermaking raw materials begin to sediment, causing the generation of raw material lumps due to the deposition of the papermaking raw materials (fibers and the like) in the middle of the path. In addition, since the papermaking raw materials (fibers and the like) are not uniformly dispersed, the fibers are unevenly deposited on the horizontal surface of the forming wire during papermaking, making it impossible to achieve a uniform fiber distribution in the longitudinal and lateral directions of the separator.

The pH during papermaking is not particularly limited as long as the papermaking raw materials (fibers and the like) are uniformly dispersed in the papermaking raw material liquid (slurry), but from the viewpoint of dispersibility, it is preferable to adjust the pH to 4 or less. Further, when it is difficult to lower the pH, it is also preferable to use a surfactant or the like in combination to improve the dispersibility of the papermaking raw materials (fibers and the like) in the papermaking raw material liquid (slurry).

The separator for a sealed lead-acid battery of the invention is formed by wet papermaking mainly using micro-glass fibers, and in order to control the gas permeation performance, the drainage resistance (SR: Schopper Riegler) value of the separator is preferably 20 or more. By adopting a configuration in which micro-glass fibers having a fine fiber diameter are blended in a large amount, the average pore size of the separator becomes small, and the pressure required for a gas to permeate in a wet state becomes high, so that the rate at which the gas moves (gas permeation rate) becomes slow.

In the separator for a sealed lead-acid battery of the invention, it is preferable to blend 2 wt% or more of long glass fibers having a number average fiber diameter of 6 µm or more and a number average fiber length of 3 mm or more, and/or organic fibers having a fineness of 0.5 dtex or more and a number average fiber length of 3 mm or more. Long fibers having a number average fiber length of 3 mm or more tend to be easily oriented in a direction perpendicular to the thickness direction of the separator. Therefore, when a gas permeates in a wet state, it becomes easier to move along the long fibers, and the rate at which the gas moves (gas permeation rate) becomes faster. On the other hand, the gas is easily released outside the separator system, and the distance that the gas permeates (gas permeability) becomes smaller.

In the separator for a sealed lead-acid battery of the invention, it is preferable to blend 5 wt% or more of the inorganic powder. Since the inorganic powder is finer than the micro-glass fiber, the inorganic powder penetrates between fibers of the micro-glass fibers and has an effect of reducing the pore size of the separator. Therefore, the pressure required for a gas to permeate in a wet state increases, and the distance that the gas permeates (gas permeability) becomes smaller.

Next, an embodiment of a sealed lead-acid battery in which the separator for a sealed lead-acid battery of the invention is used will be described, but the sealed lead-acid battery of the invention is not limited to the following embodiment.

### [Electrolyte]

The electrolyte contains sulfuric acid in an aqueous solution. The electrolyte may be gelled as necessary. The electrolyte can contain an additive utilized in a sealed lead-acid battery as necessary.

The specific gravity of the electrolyte at 20°C in a sealed lead-acid battery in a fully charged state after chemical conversion is, for example, 1.10 g/cm³ or more and 1.35 g/cm³ or less.

### [Positive Electrode Plate]

A positive electrode plate of a sealed lead-acid battery is of a paste type.

The paste-type positive electrode plate includes a positive electrode current collector and a positive electrode material. The positive electrode material is held by the positive electrode current collector. In the paste-type positive electrode plate, the positive electrode material is a material resulting from removing the positive electrode current collector from the positive electrode plate. The positive electrode current collector may be formed in the same manner as a negative electrode current collector, and can be formed by casting lead or a lead alloy or processing a lead or lead alloy sheet.

As the lead alloy used for the positive electrode current collector, a Pb-Ca-based alloy or a Pb-Ca-Sn-based alloy is preferable from the viewpoint of corrosion resistance and mechanical strength. The positive electrode current collector may have a lead alloy layer having a different composition, or may have a plurality of alloy layers.

The positive electrode material contains a positive electrode active material (lead dioxide or lead sulfate) that exhibits a capacity through an oxidation-reduction reaction. The positive electrode material may contain another additive as necessary.

An unformed paste-type positive electrode plate is obtained by filling a positive electrode current collector with a positive electrode paste, followed by aging and drying in the same manner as in the case of a negative electrode plate. Thereafter, the unformed positive electrode plate is subjected to chemical conversion. The positive electrode paste is prepared by kneading a lead powder, an additive, water, and sulfuric acid.

### [Negative Electrode Plate]

A negative electrode plate of a lead-acid battery is formed of a negative electrode current collector and a negative electrode material. The negative electrode material is a material resulting from removing the negative electrode current collector from the negative electrode plate. The negative electrode current collector may be formed by casting lead (Pb) or a lead alloy, or may be formed by processing a lead or lead alloy sheet. Examples of a processing method include expanding processing and punching processing. It is preferable to use a negative electrode grid as the negative electrode current collector because it is easy to support the negative electrode material.

The lead alloy used for the negative electrode current collector may be any of a Pb-Sb-based alloy, a Pb-Ca-based alloy, and a Pb-Ca-Sn-based alloy. Such lead or a lead alloy may further contain at least one element selected from the group consisting of Ba, Ag, Al, Bi, As, Se, Cu, and the like as an additive element.

The negative electrode material contains a negative electrode active material (lead or lead sulfate) that exhibits a capacity through an oxidation-reduction reaction, and may contain a shrinkage inhibitor, lignin, a carbonaceous material such as carbon black, barium sulfate, or the like, and may contain another additive as necessary.

The negative electrode active material in a charged state is spongy lead, but an unformed negative electrode plate is usually produced using a lead powder.

The negative electrode plate can be formed by filling a negative electrode current collector with a negative electrode paste, followed by aging and drying to produce an unformed negative electrode plate, and then subjecting the unformed negative electrode plate to chemical conversion. The negative electrode paste can be produced by adding water and sulfuric acid to a lead powder, an organic shrinkage inhibitor, and various additives as necessary, followed by kneading. In the aging step, it is preferable to age the unformed negative electrode plate at a temperature higher than room temperature and under high humidity.

The chemical conversion can be performed by charging an electrode plate group including the unformed negative electrode plate in a state where the electrode plate group is immersed in an electrolyte containing sulfuric acid in a battery container of a lead-acid battery. However, the chemical conversion may be performed before assembling the lead-acid battery or the electrode plate group. Spongy lead is formed by chemical conversion.

### Examples

The invention will be more specifically described below with reference to Examples and Comparative Examples, however, the invention is not limited to the following Examples as long as the gist of the invention is not exceeded.

Separators for a sealed lead-acid battery of Examples 1 to 15 and Comparative Examples 1 to 4 were prepared using the following raw materials.

### [Blended Raw Materials]

(1) Micro-glass fibers
   A: manufactured by ENTEK Asia Inc., number average fiber diameter: 0.6 µm
   B: manufactured by ENTEK Asia Inc., number average fiber diameter: 0.8 µm
   C: manufactured by ENTEK Asia Inc., number average fiber diameter: 1.0 µm
   D: manufactured by ENTEK Asia Inc., number average fiber diameter: 1.2 µm
   E: manufactured by ENTEK Asia Inc., number average fiber diameter: 2.0 µm
   F: manufactured by ENTEK Asia Inc., number average fiber diameter: 3.0 µm
   G: manufactured by ENTEK Asia Inc., number average fiber diameter: 4.0 µm
(2) Long glass fibers
   ECS 03 T-790DE, manufactured by Nippon Electric Glass Co., Ltd., number average fiber diameter: 6 µm, number average fiber length: 3 mm
(3) Non-thermally fusible organic fibers
   EP053, manufactured by Kuraray Co., Ltd., polyethylene terephthalate, fineness: 0.53 dtex, number average fiber length: 3 mm
(4) Thermally fusible organic fibers
   MELTY 4080, manufactured by UNITIKA LTD., two-component core-sheath type (core: polyethylene terephthalate, sheath: copolymerized polyethylene terephthalate), fineness: 1.5 dtex, number average fiber length: 3 mm
(5) Inorganic powder
   Silica (powder): BG-3, manufactured by Evonik Industries AG

### [Production of Separator]

Separators for a sealed lead-acid battery of Examples 1 to 15 and Comparative Examples 1 to 4 were produced by the following procedure according to the formulation and papermaking conditions shown in Tables 1 and 2.

The raw material mainly including micro-glass fibers combined so that the drainage resistance (SR: Schopper Riegler) value of the separator is 20 or more was macerated and dispersed in maceration water at a specified pH. After dilution to a specified raw material concentration, the resultant was poured into an inclined papermaking machine set at a specified papermaking angle at a specified raw material flow rate to produce a separator.

### [Test and Evaluation Methods]

With respect to the above Examples and Comparative Examples, evaluation was performed under the following conditions, and the results are collectively shown in Tables 1 and 2.

### (1) Drainage resistance (SR: Schopper Riegler) value

A measurement sample was prepared by collecting 2.00 g of the produced AGM separator. The sample was placed in a mixer (MV-152SP, manufactured by Panasonic Corporation), 800 ml of water was added thereto, and the mixture was stirred for 90 seconds. After stirring, the entire sample was transferred to a glass measuring cylinder and the volume was increased to 1000 ml. Then, the SR value was measured according to the method described in JIS P-8121 2012: Pulps - Determination of drainability - Part 1: Schopper-Riegler method.

### (2) Apparent density (g/cm³)

The produced AGM separator was cut to a size of 100 mm × 100 mm to prepare a test specimen, and measurement was performed for the AGM separators for a lead-acid battery according to the method described in Section 7.2.3 of Standard of Battery Association of Japan SBA S 0406-2017, and calculation was performed using the following formula. Apparent density (g/cm3) = [weight (g/m2)] / [thickness (mm)] / 1000

### (3) Gas permeability (%)

Measurement was performed according to the measurement method for the gas permeability (%) for ascertaining the gas permeation performance of the separator according to the invention described above, and calculation was performed using the following formula. Gas permeability (%) = [Bubble (gas) generation distance (mm)] / [Thickness of test specimen when pressurized to 50 kPa after thickness correction to 2.5 mm (mm)] × 100

### (4) Gas permeation rate (mm/min)

Measurement was performed according to the measurement method for the gas permeation rate (mm/min) for ascertaining the gas permeation performance of the separator according to the invention described above, and calculation was performed using the following formula. Gas permeation rate (mm/min) = [Bubble (gas) generation distance (mm)] / [Time until leaking out (sec)] × 60

### (5) Gas absorption reaction inhibitory effect (relative value)

Calculation was performed using the following formula from the measured value of the gas permeability (%) and the measured value of the gas permeation rate (mm/min). The gas absorption reaction inhibitory effect was expressed as a ratio (relative value) in comparison with the separator of Comparative Example 1 (conventional product) when the measured value of Comparative Example 1 (conventional product) was assumed as 1.0. Gas absorption reaction inhibitory effect = [Measured value of gas permeability of Comparative Example 1 (%)] / [Measured value of gas permeability of sample (%)] × [Measured value of gas permeation rate of Comparative Example 1 (mm/min)] / [Measured value of gas permeation rate of sample (mm/min)]

The evaluation results of Examples 1 to 15 and Comparative Examples 1 to 4 are collectively shown in Tables 1 and 2.

### [Table 1]

### [Table 2]

As in the separator of Example 1, when a raw material prepared in such a combination that the number average fiber diameter (average value) of the micro-glass fibers is 0.8 µm so that the drainage resistance (SR: Schopper Riegler) value is 39 was used, and the raw material concentration during papermaking was set to 0.24 wt% (0.30 wt% or less), and the raw material flow rate (jet) was set to 20 m/min (10 m/min or more), a separator having a gas permeability of 47% and a gas permeation rate of 9.8 mm/min in a wet state could be produced. As compared with the separator of Comparative Example 1 (conventional product) (raw material concentration during papermaking: 0.41 wt%, raw material flow rate (jet): 5 m/min), which has a gas permeability of 77% and a gas permeation rate of 15.7 mm/min in a wet state, the gas permeation ability was greatly reduced, and the effect of inhibiting the gas absorption reaction was higher by 2.6 times. As a result, the energy consumption could be reduced due to the inhibition of the gas absorption reaction during chemical conversion in a container, and further, the loss of electrolyte concentration (specific gravity) was small, and therefore there was no need to adjust the concentration (specific gravity) of the electrolyte after the chemical conversion in a container was completed. In addition, the gas absorption reaction during charging of the battery could be inhibited, and as a result, an increase in the temperature inside the battery was prevented and the safety of the battery (prevention of battery thermal runaway) was enhanced.

As in the separators of Examples 2 to 7, a separator produced using a raw material prepared by combining micro-glass fibers so that the drainage resistance (SR: Schopper Riegler) value is 20 or more, and by setting the raw material concentration during papermaking to 0.30 wt% or less, and the raw material flow rate (jet) to 10 m/min or more also has gas permeation performance in a wet state (a gas permeability of 55 to 75% and a gas permeation rate of 13.3 to 15.0 mm/min) equivalent to that of the separator of Example 1 having a drainage resistance (SR: Schopper Riegler) value of 39. In addition, the effect of inhibiting the gas absorption reaction was higher by 1.2 to 1.7 times as compared with the separator of Comparative Example 1 (conventional product).

As in the separator of Example 8, when a raw material prepared in such a combination that the number average fiber diameter (average value) of the micro-glass fibers is 2.0 µm so that the drainage resistance (SR: Schopper Riegler) value is 21 was used, and the raw material concentration during papermaking was set to 0.22 wt% (0.30 wt% or less), and the raw material flow rate (jet) was set to 32 m/min (10 m/min or more), a separator having a gas permeability of 54% and a gas permeation rate of 12.2 mm/min in a wet state could be produced. As compared with the separator of Comparative Example 1 (conventional product), the effect of inhibiting the gas absorption reaction was higher by 1.8 times.

As in the separators of Examples 9 to 12, a separator produced using a raw material containing, in addition to micro-glass fibers, long glass fibers having a number average fiber diameter of 6 µm and a number average fiber length of 3 mm, or non-thermally fusible organic fibers (made of polyethylene terephthalate) having a fineness of 0.53 dtex and a number average fiber length of 3 mm, and by setting the raw material concentration during papermaking to 0.30 wt% or less, and the raw material flow rate (jet) to 10 m/min or more also has gas permeation performance in a wet state (a gas permeability of 36 to 44% and a gas permeation rate of 7.7 to 12.8 mm/min) equivalent to that of a separator obtained using fine fibers such as the separator of Example 1 having a drainage resistance (SR: Schopper Riegler) value of 39. In addition, the effect of inhibiting the gas absorption reaction was higher by 2.2 to 4.2 times as compared with the separator of Comparative Example 1 (conventional product).

As in the separators of Examples 13 to 15, a separator produced using a raw material containing, in addition to micro-glass fibers, thermally fusible organic fibers having a fineness of 1.5 dtex and a number average fiber length of 3 mm and silica (powder), and by setting the raw material concentration during papermaking to 0.30 wt% or less, and the raw material flow rate (jet) to 10 m/min or more also has good gas permeation performance in a wet state (a gas permeability of 25 to 38% and a gas permeation rate of 7.6 to 17.0 mm/min). In addition, the effect of inhibiting the gas absorption reaction was higher by 1.9 to 6.4 times as compared with the separator of Comparative Example 1 (conventional product).

As in the separators of Comparative Examples 1 to 4, a separator produced by setting the raw material concentration during papermaking to more than 0.30 wt%, and the raw material flow rate (jet) to less than 10 m/min has gas permeation performance in a wet state such that the gas permeability is 77 to 92% and the gas permeation rate is 15.7 to 27.4 even though a raw material prepared by combining micro-glass fibers so that the drainage resistance (SR: Schopper Riegler) value is 20 or more is used, and the effect of inhibiting the gas absorption reaction was lower than that of the separator of Comparative Example 1 (conventional product).

The separator for a sealed lead-acid battery of the invention can inhibit the gas absorption reaction during the chemical conversion in a container, and therefore the energy consumption during the chemical conversion in a container can be reduced. In addition, the loss of electrolyte concentration (specific gravity) can be reduced, and therefore there is no need to adjust the concentration (specific gravity) of the electrolyte after the chemical conversion in a container is completed. Further, the gas absorption reaction during charging of the battery can be inhibited, and therefore an increase in the temperature inside the battery can be prevented, which can contribute to the improvement of safety such as prevention of battery thermal runaway.

### Industrial Applicability

The separator for a sealed lead-acid battery of the invention can control (reduce) the gas permeation ability of the separator, and therefore can reduce the amount of adjustment of the electrolyte concentration (specific gravity) after chemical conversion in a container of a sealed lead-acid battery, and can prevent abnormal heat generation of the battery in an actual battery use environment.

## Claims

1. A separator for a sealed lead-acid battery, which is a nonwoven fabric mainly formed of micro-glass fibers and has a gas permeation rate of 15 mm/min or less and/or a gas permeability of 70% or less in a wet state.

2. The separator for a sealed lead-acid battery according to claim 1, which is a nonwoven fabric mainly formed of micro-glass fibers and has a gas permeation rate of 15 mm/min or less and a gas permeability of 70% or less in a wet state.

3. The separator for a sealed lead-acid battery according to claim 1 or 2, wherein the micro-glass fibers have a number average fiber diameter of 4.5 µm or less and are a mixture of two or more types of micro-glass fibers having different number average fiber diameters.

4. The separator for a sealed lead-acid battery according to claim 1 or 2, wherein the separator has a drainage resistance (SR) value of 20 or more.

5. The separator for a sealed lead-acid battery according to claim 1 or 2, wherein a raw material concentration when the separator is formed is 0.30 wt% or less.

6. The separator for a sealed lead-acid battery according to claim 1 or 2, wherein a raw material flow rate when the separator is formed is 10.0 m/min or more.

7. The separator for a sealed lead-acid battery according to claim 4, wherein a blending amount of long glass fibers having a number average fiber diameter of 6 µm or more and a number average fiber length of 3 mm or more is 2 wt% or more.

8. The separator for a sealed lead-acid battery according to claim 4, wherein a blending amount of organic fibers having a fineness of 0.5 dtex or more and a number average fiber length of 3 mm or more is 2 wt% or more.

9. The separator for a sealed lead-acid battery according to claim 4, wherein a blending amount of an inorganic powder is 5 wt% or more.

10. The separator for a sealed lead-acid battery according to claim 4, wherein a blending amount of thermally fusible organic fibers is 5 wt% or more.

11. A sealed lead-acid battery, comprising the separator for a sealed lead-acid battery according to claim 1 or 2.
